# EUROPÄISCHE PATENTANMELDUNG

(11) **EP 2 065 247 A1**
(43) Veröffentlichungstag der Anmeldung: **03.06.2009**
(21) Anmeldenummer: 08450188.1
(22) Anmeldetag: 28.11.2008
(51) Int. Cl.: B60K 15/067

(54) **Fahrzeugtank und Befestigungssystem hiefür**

(30) Priorität: 29.11.2007 AT 19552007
(71) Anmelder: Alutech Gesellschaft m.b.H., 5651 Lend (AT)
(72) Erfinder: van Klaveren, Gerrit J., 2221 WE Katwijk ZH (NL); Tevini, Gerhard, 5700 Zell am See (AT); Lind, Christoph, 8200 Gleisdorf (AT)
(74) Vertreter: Weiser, Andreas

(57) **Zusammenfassung**

Befestigungssystem (4, 5) zur Montage eines Fahrzeugtanks (1) an einem Fahrzeugchassis (6) in davon auskragender Stellung, mit
einem im unteren Randbereich (9) des Tanks (1) auf dessen Außenseite befestigbaren Abstützelement (10),
einem im oberen Randbereich (11) des Tanks (1) auf dessen Außenseite befestigbaren Verankerungselement (12), und
einem am Fahrzeugchassis (6) in einer im wesentlichen vertikalen Lage befestigbaren Träger (8), der an seinem unteren Ende mit einer Aufnahme (17) für das Abstützelement (10) und an seinem oberen Ende mit einer Halterung (21) für das Verankerungselement (12) versehen ist,

wobei das Abstützelement (10) in der Aufnahme (17) um eine quer zum Träger (8) verlaufende Achse schwenkbar gelagert ist.

## Beschreibung

Die vorliegende Erfindung betrifft ein Befestigungssystem zur Montage eines Fahrzeugtanks an einem Fahrzeugchassis in davon auskragender Stellung, mit
einem im unteren Randbereich des Tanks auf dessen Außenseite befestigbaren Abstützelement,
einem im oberen Randbereich des Tanks auf dessen Außenseite befestigbaren Verankerungselement, und
einem am Fahrzeugchassis in einer im wesentlichen vertikalen Lage befestigbaren Träger, der an seinem unteren Ende mit einer Aufnahme für das Abstützelement und an seinem oberen Ende mit einer Halterung für das Verankerungselement versehen ist.

Derzeit werden auskragende Fahrzeugtanks entweder mit Hilfe die Tankwandung durchsetzender Elemente am Fahrzeugchassis befestigt (z.B. EP 0 872 372 A1, EP 1 464 528 A1) oder auf L-förmigen Trägerkonsolen abgestützt, deren vertikaler Schenkel am Fahrzeugchassis befestigt wird und deren horizontaler Schenkel den gesamten Fahrzeugtank untergreift. Die erste Lösung hat den Nachteil, daß die Wandung des Fahrzeugtanks durchbrochen werden muß, was Festigkeits- und Dichtigkeitsprobleme mit sich bringt, und die zweite Lösung hat den Nachteil, daß der für den Tankeinbau zur Verfügung stehende Bauraum durch die an der Tankunterseite verlaufenden Konsolenschenkel verringert wird.

Aus der EP 1 132 248 A2 ist ein Befestigungssystem der einleitend genannten Art bekannt, bei welchem als Verankerungs- oder Abstützelement eine U-Profilschiene mit rechteckigem Querschnitt verwendet wird, die von oben auf ein am Fahrzeugchassis befestigtes Kastenprofil aufsteckbar ist. Offensichtlich unter Verformung des U-Rechteckprofils und/oder Ausnützung eines seitlichen Spiels zwischen U-Rechteckprofil und Kastenprofil ist ein Einhängen des Behälters in Schräglage und anschließendes Kippen in die Geradlage möglich. Die bekannte U-Rechteckprofil/Kastenprofil-Paarung ist damit entweder von geringer Formstabilität oder hat seitliches Spiel, was in jedem Fall keine rüttelfeste und stabile Verankerung des Fahrzeugtanks bedeutet.

Die Erfindung setzt sich zum Ziel, eine Befestigungssystem zu schaffen, welches eine sichere, stabile und störungsunanfällige Verankerung eines Fahrzeugtanks in auskragender Stellung an einem Fahrzeugchassis ermöglicht und dabei den für den Tankeinbau zur Verfügung stehenden Bauraum optimal ausnutzt. Dieses Ziel wird mit einem Befestigungssystem der einleitend genannten Art erreicht, das sich gemäß der Erfindung dadurch auszeichnet, daß das Abstützelement in der Aufnahme um eine quer zum Träger verlaufende Achse schwenkbar gelagert ist.

Auf diese Weise wird ein Befestigungssystem geschaffen, das eine besonders einfache und dennoch sichere und stabile Montage eines Fahrzeugstanks ermöglicht, und dies bei maximaler Ausnützung des zur Verfügung stehenden Einbauraums und ohne Beeinträchtigung der Dichtheit des Tanks.

Gemäß einer besonders vorteilhaften Ausführungsform der Erfindung weist das Abstützelement und die Aufnahme jeweils eine Profilschiene auf, wobei zur genannten Schwenklagerung die eine Profilschiene mit einer abgerundeten Rippe in eine entsprechend abgerundete Nut der anderen Profilschiene eingreift. Dies stellt eine besonders einfache und stabile Drehlagerung für den Fußpunkt des Tanks dar. Dabei bleiben das Abstützelement und die Aufnahme in Profilschienenlängsrichtung relativverschieblich, sodaß der Tank bei der Montage einfach justierbar ist.

Besonders bevorzugt verläuft dazu die Profilschiene des Abstützelements über weitgehend die gesamte Längserstreckung des Tanks, was einen großen Verschiebebereich ermöglicht. Darüber hinaus eröffnet dies die weiter unten noch näher beschriebene Möglichkeit, daß mehrere über die Längserstreckung des Tanks verteilte Befestigungssysteme sich eine gemeinsame Profilschiene für ihre Abstützelemente teilen.

In einer weiteren bevorzugten Ausführungsform der Erfindung wird vorgesehen, daß das Abstützelement in die Aufnahme einhängbar ist. Dadurch kann der Tank bei der Montage zunächst in gekippter Stellung mit seinem unteren Randbereich in die Aufnahme eingesetzt bzw. eingehängt und dann in die vertikale Position geschwenkt werden, um anschließend die Verbindung zwischen Verankerungselement und Halterung zu schließen.

Gemäß einer bevorzugten Ausführungsform der Erfindung weisen das Abstützelement und/oder das Verankerungselement jeweils eine an den Tank angepaßte Anlagefläche auf, die über ihren Umfang mit der Außenseite des Tanks verbindbar ist. Dadurch kann eine lange Verbindungsnaht erzielt werden, welche dementsprechende Festigkeit hat. Eine solche Naht am Umfang der Anlagefläche kann einfach von außen hergestellt werden und benötigt keinen Zugang zur Innenseite des Tanks. Die Verbindung kann beispielsweise durch Toxen, Verkleben usw. hergestellt werden; bevorzugt wird die Verbindung durch Schweißen, z.B. Nahtschweißen, Reibrührschweißen oder Punktschweißen, hergestellt, was hohe Festigkeit ergibt.

Besonders vorteilhaft ist es, wenn bei einem parallelepipedischen Tank die Anlageflächen des Abstützelementes und/oder Verankerungselementes sich jeweils an den Eckbereich des Tanks schmiegen. Dadurch ergibt sich in diesen Bereichen ein stabilitätserhöhender Formschluß.

Das erfindungsgemäße Befestigungssystem eignet sich für alle Arten von Fahrzeugtanks, z.B. aus Stahl, Edelstahl oder Kunststoff. Besonders vorteilhaft ist das Befestigungssystem der Erfindung für Fahrzeugtanks aus Aluminium: Herkömmliche Befestigungssysteme für Aluminiumtanks haben das Problem der Kontaktkorrosion an der Schnittstelle zwischen dem Aluminium des Tanks und dem Stahl des Fahrzeugchassis. Das vorliegende Befestigungssystem überwindet dieses Problem, indem für Fahrzeugtanks aus Aluminium gemäß einem weiteren bevorzugten Merkmal der Erfindung das Abstützelement und die Aufnahme aus Aluminium gefertigt sind und die Aufnahme am Träger elektrisch isoliert gelagert ist.

Bei einer Profilschienenausführung der Aufnahme ergibt sich eine fertigungstechnisch besonders vorteilhafte Lösung, wenn dazu der Träger zwei parallele Stege aufweist, welche die Enden der Profilschiene der Aufnahme unter Zwischenschaltung von elektrischen Isolatoren halten.

Gemäß einer weiteren vorteilhaften Ausführungsform der Erfindung kann vorgesehen werden, daß das Verankerungselement eine Profilschiene und die Halterung einen Schwenkhaken aufweist, welcher in einer Nut des Verankerungselements verrastet, oder umgekehrt. Dies ermöglicht einerseits ein einfaches Schließen der Verbindung zwischen Verankerungselement und Halterung, insbesondere bei der bevorzugten Einschwenkbewegung des Fahrzeugtanks, und gestattet anderseits auch hier eine Justierung der Verbindung in Profilschienenlängsrichtung.

Besonders bevorzugt verläuft dabei die Profilschiene des Verankerungselements über weitgehend die gesamte Längserstrekkung des Tanks, was einen großen Verschiebebereich ermöglicht. Darüber hinaus trägt dies ebenfalls zu der weiter unten noch näher beschriebenen Möglichkeit bei, daß mehrere über die Längserstreckung des Tanks verteilte Befestigungssysteme sich eine gemeinsame Profilschiene für ihre Verankerungselemente teilen.

Bevorzugt ist der Schwenkhaken in der Nut durch einen Stift, eine Schraube od.dgl. gesichert, sodaß die Befestigung auch bei Manipulationen, starken Vibrationen usw. gewährleistet ist.

Für Fahrzeugtanks aus Aluminium ist es besonders günstig, wenn das Verankerungselement und die Halterung aus Aluminium gefertigt sind und die Halterung am Träger elektrisch isoliert gelagert ist, wodurch das Problem der Kontaktkorrosion auch an dieser Schnittstelle vermieden wird.

Bei einer Schwenkhakenausführung der Halterung wird dazu bevorzugt vorgesehen, daß der Träger zwei parallele Stege aufweist, welche die Achse des Schwenkhakens unter Zwischenschaltung von elektrischen Isolatoren halten.

In einem weiteren Aspekt schafft die Erfindung auch einen Fahrzeugtank, der mit zumindest einem Befestigungssystem der hier vorgestellten Art ausgestattet ist.

Wenn der Fahrzeugtank zumindest zwei solche Befestigungssysteme aufweist, ist es besonders günstig, wenn sich die Abstützelemente und/oder die Verankerungselemente aller Befestigungssysteme jeweils eine gemeinsame Profilschiene teilen, was die Fertigung und Montage vereinfacht und eine umfangreiche Längsjustierung des Tanks bei der Montage gestattet.

Eine weitere bevorzugte Ausführungsform des Fahrzeugtanks zeichnet sich dadurch aus, daß die Anlagefläche(n) über ihren Umfang mit der Außenseite des Tanks verbunden ist/sind, bevorzugt verschweißt.

Zusätzlich kann die Anlagefläche mit der Außenseite des Tanks auch noch über ihre Fläche verbunden werden, bevorzugt durch Verkleben, um die Stabilität weiter zu erhöhen.

Bei Fahrzeugtanks, welche in an sich bekannter Weise eine Schwallwand enthalten, ist es aus Festigkeitsgründen besonders vorteilhaft, wenn das oder jedes Befestigungselement jeweils am Ort einer Schwallwand liegt. Bevorzugt können am Ort eines Befestigungselements sogar zwei oder mehrere eng nebeneinanderliegende Schwallwände vorgesehen werden, was besonders hohe Festigkeit ergibt.

Die Erfindung wird nachstehend anhand von in den beigeschlossenen Zeichnungen dargestellten Ausführungsbeispielen näher erläutert. In den Zeichnungen zeigt
Fig. 1 einen Fahrzeugtank mit zwei Befestigungssystemen gemäß der Erfindung in einer teilweise aufgebrochenen Perspektivansicht;
Fig. 2 das Befestigungssystem der Erfindung im Schnitt in Verbindung mit einem teilweise dargestellten Fahrzeugtank und Fahrzeugchassis; und
Fig. 3 eine alternative Ausführungsform eines Fahrzeugtanks mit zwei Befestigungssystemen, die sich gemeinsame Profilschienen teilen, in einer Perspektivansicht.

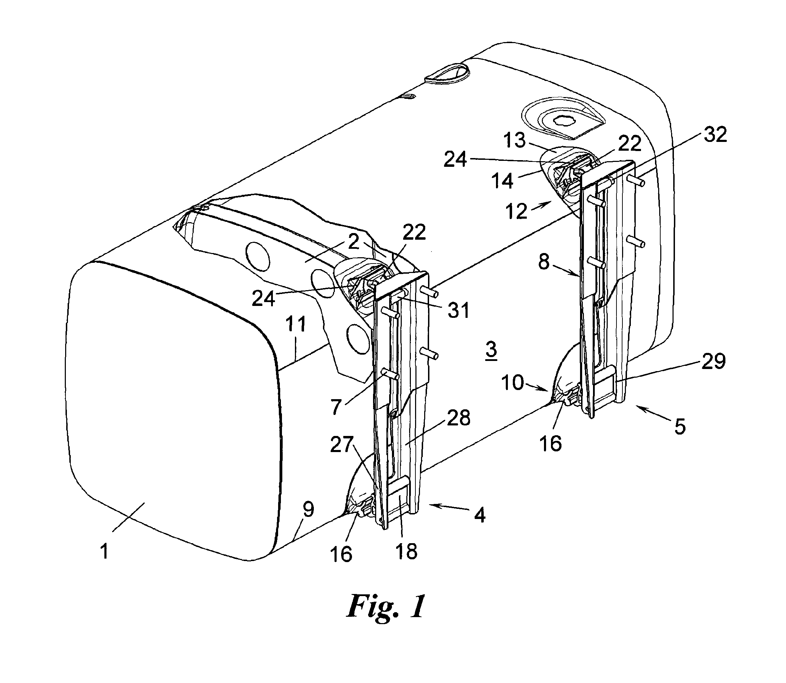

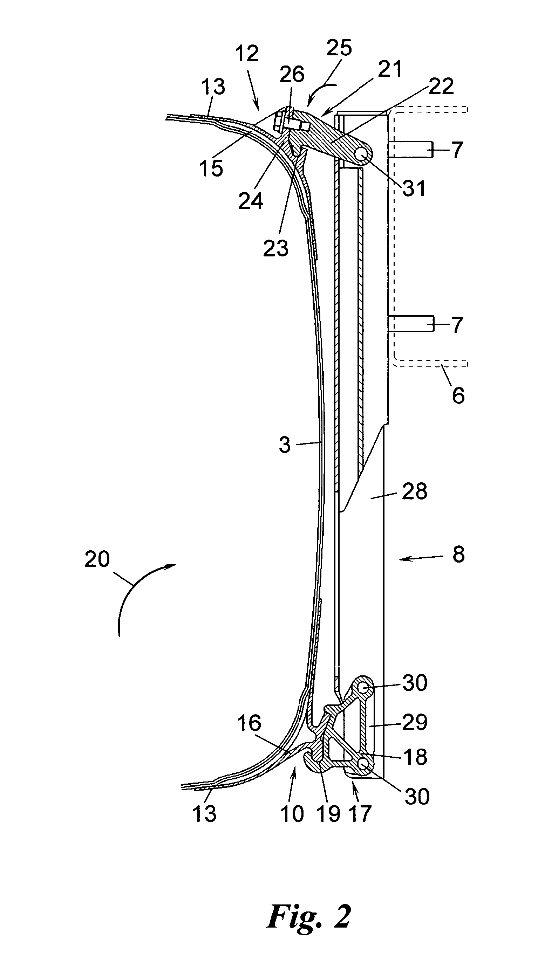

Die Fig. 1 und 2 zeigen einen etwa parallelepipedischen Fahrzeugtank 1, der in seinem Inneren zu seiner Längsrichtung normal orientierte Schwallwände 2 enthält, wie dem Fachmann bekannt. An der Außenseite 3 des Tanks 1 greifen zwei Befestigungssysteme 4, 5 an, um den Tank 1 an einem Fahrzeugchassis 6 in einer davon auskragenden Stellung zu montieren. Die Befestigungssysteme 4, 5 liegen bevorzugt an jenen Orten entlang der Längsrichtung des Tanks 1, an denen auch jeweils eine Schwallwand 2 liegt. Zur Erhöhung der Festigkeit und Steifigkeit des Tanks 1 können jeweils auch zwei oder mehrere eng nebeneinanderliegende Schwallwände 2 am Ort eines Befestigungssystems 4, 5 angeordnet sein (nicht gezeigt).

Jedes Befestigungssystem 4, 5 umfaßt einerseits einen am Fahrzeugchassis 6 mit Hilfe von Schweißnähten, Nieten, Schrauben 7 usw. im wesentlichen vertikal befestigbaren Träger 8 und anderseits zwei damit verbindbare, am Tank 1 befestigbare Elemente, u.zw. ein im unteren Randbereich 9 der Außenseite 3 befestigbares Abstützelement 10 und ein im oberen Randbereich 11 der Außenseite 3 befestigbares Verankerungselement 12.

Das Abstützelement 10 und das Verankerungselement 12 weisen jeweils eine an den Tank 1 angepaßte, d.h. den Eckbereich 9 bzw. 11 des Tanks 1 umschmiegende Anlagefläche 13 auf, die über ihren Umfang 14 mit der Außenseite 3 verschweißt ist, beispielsweise durch Nahtschweißen, Reibrührschweißen oder Punktschweißen. Anstelle eines Verschweißens kann, falls gewünscht, z.B. auch eine Klebe- oder Fügeverbindung gewählt werden, beispielsweise Toxen. Optional kann die Anlagefläche 13 zusätzlich mit der Außenseite 3 über ihre Fläche (teilweise oder vollflächig) verbunden werden, beispielsweise durch eine Klebeschicht 15.

Das Abstützelement 10 umfaßt eine Profilschiene 16, mit welcher es in eine Halterung 17 am unteren Ende des Trägers 8 einhängbar ist. Die Halterung 17 ist im gezeigten Beispiel durch eine Profilschiene 18 gebildet, die eine nach oben offene Nut 19 darbietet, in welche eine entsprechende Rippe der Profilschiene 16 des Abstützelementes 10 von oben einhängbar und darin in Richtung des Pfeiles 20 schwenkbar gelagert ist. Dadurch kann der Tank 1 in einer nach außen gekippten Stellung in die Aufnahme 17 eingehängt und anschließend durch Verschwenken in Richtung des Pfeiles 20 in die in den Fig. 1 und 2 gezeigte vertikale Lage gebracht werden.

An seinem oberen Ende ist der Träger 8 mit einer Halterung 21 für das Verankerungselement 12 ausgestattet. Die Halterung 21 ist im gezeigten Beispiel ein Schwenkhaken 22, welcher in einer Nut 23 einer am Verankerungselement 12 ausgebildeten Profilschiene 24 in Richtung des Pfeiles 25 einrasten kann. In der eingerasteten Stellung kann der Schwenkhaken 22 durch einen Querstift, eine Schraube 26 od.dgl. gesichert werden. Auf diese Weise kann der Tank 1 nach dem Einhängen in die Aufnahme 17 und dem Hochschwenken in Richtung des Pfeiles 20 durch Schließen der Verbindung zwischen Verankerungselement 12 und Halterung 21 befestigt werden.

Es versteht sich, daß der Schwenkhaken 22 auch am Tank 1 und die Nut 23 auch am Träger 8 angeordnet werden könnte, und daß anstelle des Schwenkhakens 22 auch andere Halterungen 21 verwendet werden können.

Durch die schienenförmige Ausführung des Abstützelementes 10 und/oder der Aufnahme 17 sowie des Verankerungselementes 12 und/oder der Halterung 21 ist eine Längsverschiebung des Tanks 1 bei der Montage möglich. Haben die Profilschienen beispielsweise eine Länge von 100 mm, ist eine Justierung bis zu ± 50 mm, bzw. ± 100 mm bei jeweils ineinandergreifenden Schienen, in Längsrichtung des Tanks 1 möglich.

Für Fahrzeugtanks 1 aus Aluminium ermöglicht das dargestellte Befestigungssystem überdies eine Kontaktisolierung zwischen dem Aluminium des Fahrzeugtanks 1 und dem Stahl des Fahrzeugchassis 6. Dazu werden bevorzugt das Abstützelement 10, das Verankerungselement 12, die Aufnahme 17 und die Halterung 21 aus Aluminium gefertigt, der Träger 8 hingegen aus Stahl, und die Aufnahme 17 und die Halterung 21 werden jeweils elektrisch isoliert am Träger 8 gelagert. Im gezeigten Beispiel weist zu diesem Zweck der Träger 8 zwei parallele Stege 27, 28 auf, welche an ihrem unteren Ende die Enden der Profilschiene 18 der Aufnahme 17 unter Zwischenschaltung von Kunststoffplatten 29 halten. Sicherungsbolzen 30, welche die Stege 28, 29, die Profilschiene 18 und die Kunststoffplatten 29 durchsetzen, können in Stahl oder Edelstahl gefertigt werden, wenn sie mittels Kunststoffbuchsen gesondert isoliert werden.

In analoger Weise ist der Schwenkhaken 22 gegenüber dem Träger 8 elektrisch isoliert, beispielsweise indem für seine Schwenklagerung eine Achse 31 Verwendung findet, die mittels Kunststoffbuchsen 32 gegenüber den Stegen 27, 28 isoliert ist.

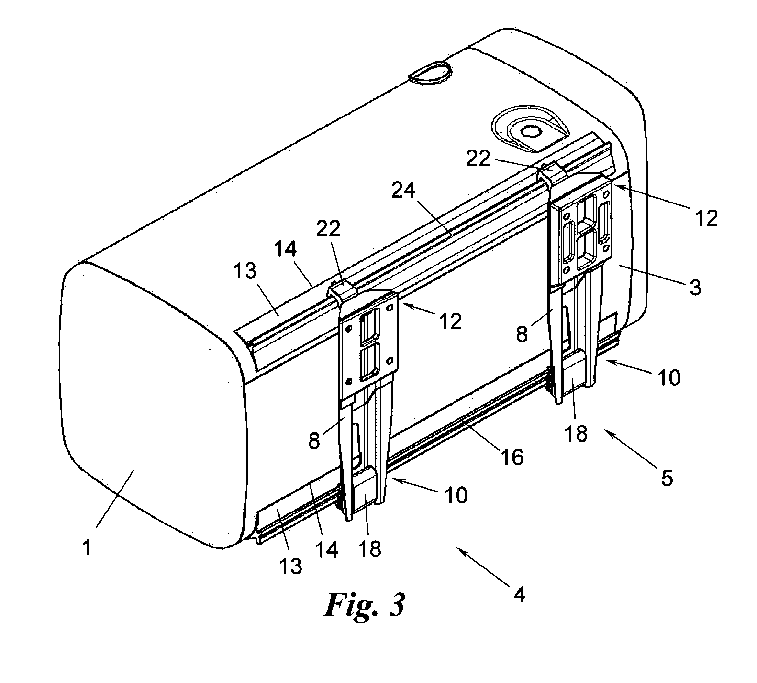

Fig. 3 zeigt eine weitere Ausführungsform eines Fahrzeugtanks 1, wobei gleiche Bezugszeichen gleiche Teile wie in den Fig. 1 und 2 bezeichnen, mit Ausnahme der folgenden Punkte.

Der Fahrzeugtank 1 ist in dieser Ausführungsform mit zwei Befestigungssystemen 4, 5 ausgestattet, welche sich eine gemeinsame Profilschiene 16 für die Abstützelemente 10 und eine gemeinsame Profilschiene 24 für die Verankerungselemente 12 teilen. Die Länge der Profilschienen 16, 24 ist größer als der gegenseitige Abstand der Träger 8 der Befestigungssysteme 4, 5, so daß der Tank 1 bei der Montage in Längsrichtung - innerhalb des von den Profilschienen 16, 24 zur Verfügung gestellten Spielraums - justierbar ist. Bevorzugt verlaufen die Profilschienen 16, 24 über weitgehend die gesamte Längserstreckung des Tanks 1.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Befestigungssystem (4, 5) zur Montage eines Fahrzeugtanks (1) an einem Fahrzeugchassis (6) in davon auskragender Stellung, mit
einem im unteren Randbereich (9) des Tanks (1) auf dessen Außenseite (3) befestigbaren Abstützelement (10),
einem im oberen Randbereich (11) des Tanks (1) auf dessen Außenseite (3) befestigbaren Verankerungselement (12), und
einem am Fahrzeugchassis (6) in einer im wesentlichen vertikalen Lage befestigbaren Träger (8), der an seinem unteren Ende mit einer Aufnahme (17) für das Abstützelement (10) und an seinem oberen Ende mit einer Halterung (21) für das Verankerungselement (12) versehen ist,
**dadurch gekennzeichnet,**
**daß** das Abstützelement (10) in der Aufnahme (17) um eine quer zum Träger (8) verlaufende Achse schwenkbar gelagert ist.

2. Befestigungssystem nach Anspruch 1, **dadurch gekennzeichnet, daß** das Abstützelement (10) und die Aufnahme (17) jeweils eine Profilschiene (16, 18) aufweisen, wobei zur genannten Schwenklagerung die eine Profilschiene (16) mit einer abgerundeten Rippe in eine entsprechend abgerundete Nut (19) der anderen Profilschiene (19) eingreift.

3. Befestigungssystem nach Anspruch 2, **dadurch gekennzeichnet, daß** die Profilschiene (16) des Abstützelements (10) über weitgehend die gesamte Längserstreckung des Tanks (1) verläuft.

4. Befestigungssystem nach einem der Ansprüche 1 bis 3, **dadurch gekennzeichnet, daß** das Abstützelement (10) in die Aufnahme (17) einhängbar ist.

5. Befestigungssystem nach einem der Ansprüche 1 bis 4, **dadurch gekennzeichnet, daß** das Abstützelement (10) und/oder das Verankerungselement (12) jeweils eine an den Tank (1) angepaßte Anlagefläche (13) aufweisen, die über ihren Umfang (14) mit der Außenseite (3) des Tanks (1) verbindbar ist, bevorzugt verschweißbar.

6. Befestigungssystem nach Anspruch 5 für einen parallelepipedischen Tank, **dadurch gekennzeichnet, daß** die Anlageflächen (13) des Abstützelementes (10) und/oder Verankerungselementes (12) sich jeweils an den Eckbereich (9, 11) des Tanks (1) schmiegen.

7. Befestigungssystem nach einem der Ansprüche 1 bis 6 für einen Fahrzeugtank aus Aluminium, **dadurch gekennzeichnet, daß** das Abstützelement (10) und die Aufnahme (17) aus Aluminium gefertigt sind und die Aufnahme (17) am Träger (8) elektrisch isoliert gelagert ist.

8. Befestigungssystem nach Anspruch 7 in Verbindung mit Anspruch 2, **dadurch gekennzeichnet, daß** der Träger (8) zwei parallele Stege (27, 28) aufweist, welche die Enden der Profilschiene (18) der Aufnahme (17) unter Zwischenschaltung von elektrischen Isolatoren (29) halten.

9. Befestigungssystem nach einem der Ansprüche 1 bis 8, **dadurch gekennzeichnet, daß** das Verankerungselement (12) eine Profilschiene (24) und die Halterung (21) einen Schwenkhaken (22) aufweist, welcher in einer Nut (23) des Verankerungselements (12) verrastet, oder umgekehrt.

10. Befestigungssystem nach Anspruch 9, **dadurch gekennzeichnet, daß** die Profilschiene (24) des Verankerungselements (12) über weitgehend die gesamte Längserstreckung des Tanks (1) verläuft.

11. Befestigungssystem nach einem der Ansprüche 1 bis 10, für einen Fahrzeugtank aus Aluminium, **dadurch gekennzeichnet, daß** das Verankerungselement (12) und die Halterung (21) aus Aluminium gefertigt sind und die Halterung (21) am Träger (8) elektrisch isoliert gelagert ist.

12. Befestigungssystem nach Anspruch 11 in Verbindung mit Anspruch 9, **dadurch gekennzeichnet, daß** der Träger (8) zwei parallele Stege (27, 29) aufweist, welche die Achse (31) des Schwenkhakens (22) unter Zwischenschaltung von elektrischen Isolatoren (32) halten.

13. Fahrzeugtank mit zumindest einem Befestigungssystem nach einem der Ansprüche 1 bis 12.

14. Fahrzeugtank mit zumindest zwei Befestigungssystemen nach einem der Ansprüche 1 bis 12, **dadurch gekennzeichnet, daß** sich die Abstützelemente (10) aller Befestigungssysteme (4, 5) eine gemeinsame Profilschiene (16) teilen und/oder daß sich die Verankerungselemente (12) aller Befestigungssysteme (4, 5) eine gemeinsame Profilschiene (24) teilen.

15. Fahrzeugtank nach Anspruch 13 oder 14 in Verbindung mit Anspruch 5, **dadurch gekennzeichnet, daß** die Anlagefläche(n) (13) über ihren Umfang (14) mit der Außenseite (3) des Tanks (1) verbunden ist/sind, bevorzugt verschweißt.

16. Fahrzeugtank nach Anspruch 15, **dadurch gekennzeichnet, daß** die Anlagefläche (13) zusätzlich mit der Außenseite (3) des Tanks (1) über ihre Fläche verbunden ist, bevorzugt durch Verkleben.

17. Fahrzeugtank nach einem der Ansprüche 13 bis 16, welcher eine Schwallwand enthält, **dadurch gekennzeichnet, daß** das oder jedes Befestigungselement (4, 5) jeweils am Ort einer Schwallwand (2) liegt, wobei bevorzugt am Ort eines Befestigungselements (4, 5) zumindest zwei Schwallwände eng nebeneinander liegen.
